# EUROPÄISCHE PATENTSCHRIFT

(11) **EP 2 812 983 B1**
(45) Veröffentlichungstag und Bekanntmachung des Hinweises auf die Patenterteilung: **03.03.2021**
(21) Anmeldenummer: 13702988.0
(22) Anmeldetag: 31.01.2013
(51) Int. Cl.: H02K 1/24, H02K 15/02, H02K 19/06, H02K 19/10, H02K 15/12

(54) **ROTOR UND RELUKTANZMOTOR**
ROTOR AND RELUCTANCE MOTOR
ROTOR ET MOTEUR À RÉLUCTANCE

(30) Priorität: 10.02.2012 DE 102012202017; 29.01.2013 DE 102013201353
(43) Veröffentlichungstag der Anmeldung: 17.12.2014
(73) Patentinhaber: KSB SE & Co. KGaA, 67227 Frankenthal (DE)
(72) Erfinder: GONTERMANN, Daniel, 67227 Frankenthal (DE); SCHAAB, Jochen, 55268 Nieder-Olm (DE); SCHULLERER, Joachim, 76764 Rheinzabern (DE)
(86) Internationale Anmeldenummer: PCT/EP2013/051886
(87) Internationale Veröffentlichungsnummer: WO 2013/117480

(56) Entgegenhaltungen:
- EP-A2- 0 426 376
- EP-A2- 1 786 088
- DE-A1-102009 054 599
- JP-A- H08 340 666
- JP-A- 2009 044 791

## Beschreibung

Die Erfindung betrifft einen Rotor für eine Synchronmaschine, insbesondere eine Reluktanzmaschine, umfassend ein zylinderförmig aufgebautes weichmagnetisches Element, wobei das weichmagnetische Element Aussparungen zur Ausbildung von magnetischen Flusssperren aufweist, die eine gerade Anzahl von ausgeprägten magnetischen Polen ausbilden, wobei wenigstens eine Aussparung zumindest teilweise mit einem diamagnetischen oder paramagnetischen Medium anstelle von Luft gefüllt ist, das diamagnetische oder paramagnetische Medium (11) einen einteiligen Körper bildet und das weichmagnetische Element (1, 4) ein Blechpaket (4) ist.

Üblicherweise werden Rotoren für Synchron-Reluktanzmaschinen mit einem zylinderförmigen weichmagnetischen Element ausgestattet, das koaxial auf der Rotorachse angeordnet wird. Zur Ausbildung mindestens eines Polpaares bzw. Lückenpaares umfasst das weichmagnetische Element Flussleit- sowie Flusssperrabschnitte, die sich gegenseitig in einer unterschiedlich stark ausgeprägten magnetischen Permeabilität unterscheiden. Der Abschnitt mit großer magnetischer Leitfähigkeit wird bekannterweise als d-Achse des Rotors und der Abschnitt mit vergleichsweise geringerer Leitfähigkeit als q-Achse des Rotors gekennzeichnet. Eine optimale Drehmomentausbeute stellt sich dann ein, wenn die d-Achse eine möglichst große magnetische Leitfähigkeit und die q-Achse eine möglichst niedrige magnetische Leitfähigkeit aufweist.

Erreicht wird diese Voraussetzung oftmals durch die Ausbildung von mehreren mit Luft gefüllten Aussparungen im weichmagnetischen Element entlang der q-Achse, wie beispielsweise in der EP 1 786 088 A2 offenbart. Dadurch wird der magnetische Fluss in Richtung der q-Achse gehemmt wird und folglich die Permeabilität sinkt. Das so aufgebaute weichmagnetische Element wird anschließend auf eine Rotorwelle aufgebracht und axial sowie tangential fixiert.

Aus der JP 2009 044 791 A1 ist ein Reluktanzmotor bekannt, bei dem die Aussparungen im weichmagnetischen Element mit einem Harz gefüllt sind, das den laminierten Rotorkern zusammenhält.

Die EP 0 426 376 A1 offenbart einen Rotor für einen getakteten Reluktanzmotor mit einer Vielzahl von in Axialrichtung gestapelten Rotorlagen und einer Vielzahl von Rotorpolen, die sich von der Nabe radial nach außen erstrecken. Zwischen den Rotorpolen sind Spalten vorgesehen, die mit elektrisch isolierendem Material gefüllt sind, um die Zusammenhaltefestigkeit des Stapels zu erhöhen.

Ein in der DE 10 2009 054 599 A1 gezeigter Reluktanzmotor weist zwischen den die Pole bildenden Rotorzähnen Ausnehmungen auf, in denen kein Material oder elektrisch isolierendes Material angeordnet ist. Die freien Enden der einzelnen Rotorzähne sind mittels magnetisch leitfähigem Material miteinander verbunden.

Der vorliegenden Erfindung liegt die Aufgabe zugrunde, einen derart ausgeprägten Rotor für eine Synchronmaschine, insbesondere für eine Reluktanzmaschine, weiterzuentwickeln, um das Verhältnis der unterschiedlich stark ausgeprägten magnetischen Permeabilitäten entlang der d- und q-Achse zu optimieren. Weiterhin setzt sich die Erfindung zum Ziel, den Aufbau eines derartigen Rotors weiterzuentwickeln, um insbesondere seine Herstellung zu vereinfachen.

Zur Lösung dieser Aufgabe wird ein Rotor mit den Merkmalen des Anspruchs 1 vorgeschlagen. Weitere vorteilhafte Ausführungen des erfindungsgemäßen Rotors sind Gegenstand der abhängigen Unteransprüche 2 bis 6.

Zur Lösung der Aufgabe ist nun vorgesehen, dass wenigstens zwei benachbarte Bleche des Blechpaketes in axialer Richtung zueinander beabstandet angeordnet sind und der gebildete Zwischenraum zumindest teilweise durch das diamagnetische oder paramagnetische Medium gefüllt ist, wobei die Beabstandung durch Einfügen eines Distanzelementes gewährleistet ist.

Insbesondere durch die Wahl eines diamagnetischen Mediums anstelle von Luft kann die Differenz der Permeabilität zwischen der q- und d-Achse vergrößert werden.

Bevorzugt sind die Aussparungen vollständig mit dem diamagnetischen Medium ausgefüllt. Insbesondere können alle Aussparungen des weichmagnetischen Elementes vollständig mit dem diamagnetischen oder paramagnetischen Medium ausgefüllt sein. Erfindungsgemäß ist das gesamte diamagnetische oder paramagnetische Medium lediglich ein einziges Bauteil.

Weiterhin kann das erfindungsgemäße diamagnetische oder paramagnetische Medium auch als konstruktives Element zum Aufbau des Rotors eingesetzt werden. In diesem Fall stellt das diamagnetische oder paramagnetische Medium ein Trägermedium zur Aufnahme des weichmagnetischen Elementes dar, wobei die Funktion des Mediums als Träger insbesondere bei einer einteiligen Ausführung des diamagnetischen oder paramagnetischen Mediums von Vorteil ist. Vorzugsweise kann das weichmagnetische Element mit Hilfe des diamagnetischen oder paramagnetischen Trägermediums sehr einfach in axialer Richtung auf der Rotorwelle fixiert werden.

Die aus dem Stand der Technik bekannten metallischen Endscheiben zur Fixierung eines derartigen weichmagnetischen Elementes auf der Rotorachse sind überflüssig und können vollständig durch das verwendete diamagnetische oder paramagnetische Medium ersetzt werden. Insbesondere können an den Endflächen des zylinderförmigen weichmagnetischen Elementes Endscheiben aus dem diamagnetischen oder paramagnetischen Medium gebildet sein, die zur Fixierung des weichmagnetischen Elementes in axialer Richtung auf der Rotorwelle dienen.

Die bevorzugte Ausführung des erfindungsgemäßen Rotors ermöglicht es, dass die magnetische Sperrwirkung sowie die axiale Fixierung des weichmagnetischen Elementes durch ein einziges Bauteil, das diamagnetische oder paramagnetische Trägermedium, ausgeführt wird. Folglich bildet das diamagnetische oder paramagnetische Trägermedium zusammen mit dem weichmagnetischen Element die beiden einzigen Komponenten des erfindungsgemäßen Verbundrotors.

Erfindungsgemäss ist das weichmagnetische Element des Rotors ein Blechpaket, das - wie aus dem Stand der Technik bekannt - aus mehreren in axialer Richtung des Rotors aufeinander gestapelter Bleche aufgebaut ist. Diese Bauweise verhindert das Auftreten von Wirbelströmen im weichmagnetischen Element. Alternativ - jedoch nicht zur Erfindung gehörend-bietet sich eine Herstellung des verwendeten weichmagnetischen Elementes nach einem pulvermetallurgischen Verfahren an.

Das Blechpaket besteht aus einzelnen Blechschnitten, wobei jedes einzelne entlang der q-Achse mehrere mit einem diamagnetischen oder paramagnetischen Medium gefüllte Flusssperren aufweist. Insbesondere bietet sich ein Aufbau des Blechpaketes nach der U.S. 5,818,140 an. Die entsprechenden Aussparungen, d. h. die gebildeten Flusssperren, sind dann nach der Lehre der vorliegenden Erfindung mit einem diamagnetischen oder paramagnetischen Medium anstelle von Luft gefüllt.

Erfindungsgemäss werden wenigstens zwei benachbarte Bleche des Blechpaketes in axialer Richtung zueinander beabstandet angeordnet. Erfindungsgemäss wird der gebildete Zwischenraum zwischen den benachbarten Blechschnitten zumindest teilweise durch das diamagnetische oder paramagnetische Medium gefüllt. Diese Bauweise des Rotors erhöht die Stabilität des Rotors im Betrieb. Die auftretenden Radialkräfte auf dem Motor werden durch das diamagnetische oder paramagnetische Trägermedium aufgenommen. Oftmals verwendete radiale Tragrippen innerhalb der einzelnen Bleche, welche bisher in bestimmten Ausführungen zur radialen Versteifung des Blechpaketes erforderlich waren, sind unnötig.

Vorzugsweise füllt das diamagnetische oder paramagnetische Trägermedium den gesamten gebildeten zylindrischen Zwischenraum zwischen einzelnen Blechen in kontinuierlicher Weise aus.

Möglich ist es, dass in regelmäßigen Abständen in axialer Richtung des Blechpakets jeweils zwei Bleche beabstandet zueinander angeordnet sind um zusätzlichen Raum für das diamagnetische oder paramagnetische Medium zu schaffen.

Erfindungsgemäss wird die beabstandete Anordnung zweier benachbarter Bleche durch Einfügen eines Distanzelementes erzielt. Vorzugweise werden ringförmige Distanzelemente eingesetzt, wobei der in radialer Richtung oberhalb der Distanzelemente liegende Zwischenraum durch das diamagnetische oder paramagnetische Trägermedium gefüllt ist.

Denkbar ist auch ein modifizierter Blechschnitt des weichmagnetischen Elementes, wobei ein im Bereich der q-Achse am äußeren Umfang fehlender tangentialer Anteil des weichmagnetischen Elementes durch das diamagnetische oder paramagnetische Medium vervollständigt ist. Somit wird der zum Vollzylinder fehlende Raumanteil des weichmagnetischen Elementes ebenfalls durch das diamagnetische oder paramagnetische Trägermaterial gebildet.

Zwischen jeweils zwei benachbarten Aussparungen entlang der q-Achse des weichmagnetischen Elementes liegen weichmagnetische Elementteile, die in der Regel magnetisch leitend miteinander verbunden sind. In einer besonders bevorzugten Ausführung der Erfindung stehen die zwischen jeweils zwei Flusssperren gebildeten leitenden weichmagnetischen Elementteile nicht magnetisch leitend miteinander in Verbindung. Dadurch wird der Unterschied der Permeabilität entlang der d-Achse und der q-Achse weiter vergrößert. In diesem Fall wird die radiale und axiale Fixierung der magnetischen Elemente vollständig durch das diamagnetische oder paramagnetische Trägermaterial übernommen.

Das verwendete diamagnetische oder paramagnetische Medium umfasst vorzugsweise Polymere und/oder Duromere und/oder Keramik und/oder Glas und/oder Holz.

Die Erfindung betrifft des Weiteren ein Verfahren zur Herstellung eines Rotors nach einer voranstehend aufgezeigten Ausführungsform. Erfindungsgemäß wird in einem ersten Verfahrensschritt das weichmagnetische zylinderförmige Element in Form eines Blechpaketes mit Aussparungen zur Ausbildung von magnetischen Flusssperren und ausgeprägten magnetischen Polen aufgebaut, wobei wenigstens zwei benachbarte Bleche des Blechpaketes in axialer Richtung zueinander beabstandet angeordnet werden und die Beabstandung durch Einfügen eines Distanzelementes gewährleistet wird, in einem weiteren Verfahrensschritt das diamagnetische oder paramagnetische Medium mittels einem urformenden Fertigungsverfahren in bzw. um das aufgebaute weichmagnetische Element ein- bzw. aufgebracht wird und das diamagnetische oder paramagnetische Medium als einteiliger Körper ausgebildet wird.

Beispielsweise wird bei der Ausführung des weichmagnetischen Elementes als Blechpaket in einem ersten Verfahrensschritt eine Vielzahl identischer Bleche in axialer Richtung aufeinander gestapelt. Im zweiten Verfahrensschritt wird das diamagnetische oder paramagnetische Medium mittels dem urformenden Fertigungsverfahren insbesondere Spritzguss, in die Aussparungen der einzelnen Bleche eingebracht, wobei gegebenenfalls ebenfalls Endscheiben zur Fixierung des Blechpaketes auf der Rotorachse aus dem diamagnetischen oder paramagnetischen Medium gebildet werden. Zweckmäßig ist es, wenn das benötigte diamagnetische oder paramagnetische Medium vollständig in einem Guss in das Blechpaket eingelassen wird und folglich nur ein einziges Bauteil darstellt. Das sich durch das Blechpaket erstreckende diamagnetische oder paramagnetische Medium übernimmt sowohl die magnetische Sperrwirkung als auch die axiale Fixierung des Blechpaketes. Im Zusammenspiel mit dem Blechpaket ist der resultierende Verbundrotor aus lediglich zwei einzelnen Komponenten aufgebaut.

Analog dazu erfolgt die Herstellung des erfindungsgemäßen Rotors auf Basis eines nach einem pulvermetalllurgischen Verfahren hergestellten Materials. Vorab wird die gewünschte Form des weichmagnetischen zylinderförmigen Elementes durch das Material nachgebildet, wobei hier ebenfalls entsprechende Aussparungen vorgesehen sind. Die Aussparungen werden in einem zweiten Verfahrensschritt mit dem diamagnetischen oder paramagnetischen Medium gefüllt.

Des Weiteren betrifft die vorliegende Erfindung die Verwendung des erfindungsgemäßen Rotors, insbesondere nach einer der oben genannten vorteilhaften Ausführungsformen, in einer Reluktanzmaschine, insbesondere in einer Synchron-Reluktanzmaschine.

Ferner ist die Erfindung auf einen Reluktanzmotor gerichtet, insbesondere einen Synchron-Reluktanzmotor, der mit dem erfindungsgemäßen Rotor, insbesondere nach einer der vorgenannten vorteilhaften Ausführungsformen, ausgestattet ist. Der Reluktanzmotor weist offensichtlich die selben Eigenschaften und Vorteile wie der erfindungsgemäße Rotor gemäß einer der vorteilhaften Ausführungsformen auf, weshalb an dieser Stelle auf eine erneute Beschreibung verzichtet wird.

Weitere Merkmale und Einzelheiten der Erfindung sollen im Folgenden anhand mehrerer graphischer Darstellungen erläutert werden. Es zeigen:
- Figuren 1 bis 4:: verschiedene Ausschnitte eines Blechschnitts des verwendeten Blechpaketes eines Rotors in unterschiedlichen Ausführungsformen,
- Figuren 5 und 6:: Seitenansichten des Rotors gemäß den in den Figuren 1 bis 3 dargestellten Ausführungsformen
- Figur 7:: ein Ausschnitt einer weiteren Ausführungsform

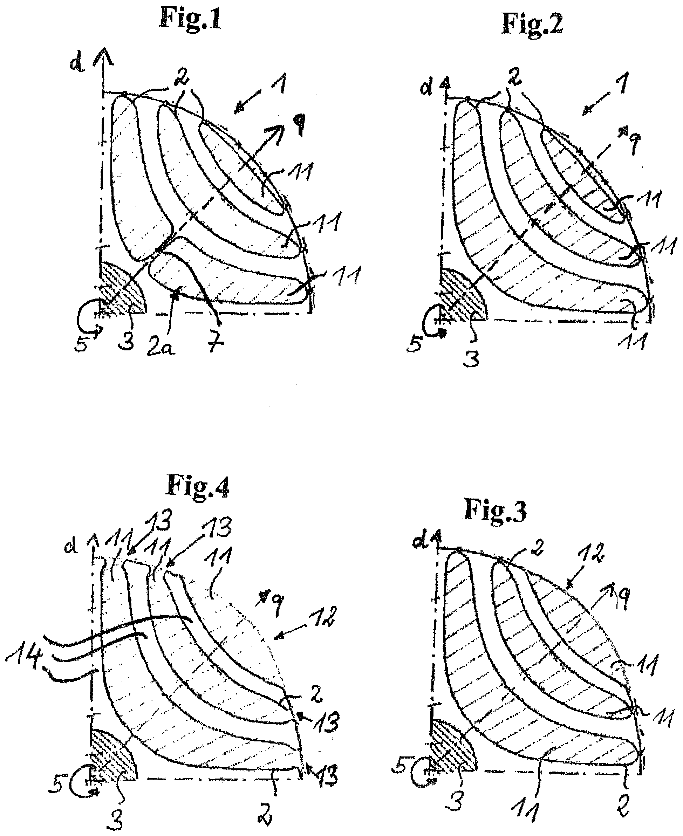

Die Figur 1 zeigt - nicht zur Erfindung gehörend-einen Quadranten eines Blechschnitts eines Rotors für einen Reluktanzmotor. Zur Vereinfachung der Darstellung ist der Stator nicht abgebildet. Das Rotorblech 1 verfügt über mehrere Aussparungen 2, die die Funktion von Flusssperren übernehmen und durch deren Anordnung ein vierpoliger Rotor gebildet wird, dessen magnetischer Fluss in den Bereichen mit den Flusssperren 2 gehemmt ist. Allgemein wird der Bereich mit hoher magnetischer Leitfähigkeit als d-Achse und der Bereich geringer magnetischer Leitfähigkeit als q-Achse gekennzeichnet. Zur Klarstellung sei angemerkt, dass die übrigen Quadranten des Blechschnitts identisch zum dargestellten Quadrant ausgebildet sind.

Mehrere Rotorbleche 1 mit dem gezeigten Blechschnitt werden in Richtung der Drehachse 5 zu einem Blechpaket gestapelt, das auf einer Rotorwelle 3 befestigt wird.

Erfindungsgemäß wird in die einzelnen Aussparungen 2 anstelle von Luft ein diamagnetisches oder paramagnetisches Medium 11 eingelassen, das beispielsweise Polymere und/oder Duromere und/oder Keramik und/oder Glas und/oder Holz umfasst. Durch die Wahl eines diamagnetischen Mediums kann die Differenz der Permeabilität entlang der beiden Achsen d, q erhöht werden. Zudem wirkt das eingelassene diamagnetische oder paramagnetische Medium als Trägermedium, das die einzelnen gestapelten Blechpakete aufnimmt und auf einer Rotorwelle 3 fixiert.

Das Medium 11 kann auch geschäumt sein, um dessen Trägheit zu reduzieren und damit die Laufeigenschaften des Rotors zu verbessern. Gleichzeitig kann eine metallische Beschichtung der Flusssperren eine bessere Flussführung ermöglichen.

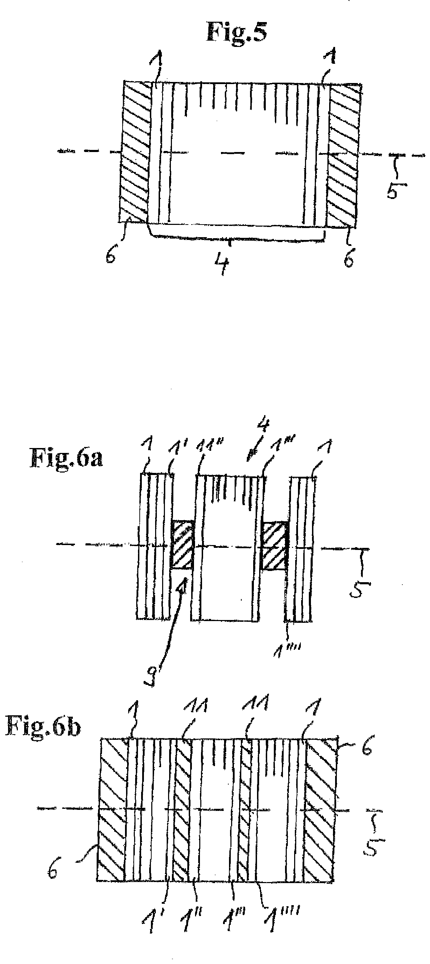

In Figur 5 ist - nicht zur Erfindung gehörend-eine Seitenansicht auf den Rotor gezeigt, wobei das Blechpaket 4 aus einer Vielzahl einzelner Blechschnitte 1 gemäß Figur 1 zusammengesetzt ist. Das Blechpaket 4 nimmt insgesamt eine zylindrische Form an, wobei endseitig in axialer Richtung des Blechpaketes 4 jeweils eine Endscheibe 6 angeordnet ist, die ebenfalls aus dem diamagnetischen oder paramagnetischen Medium 11 gefertigt ist. Diese Endscheiben 6 dienen zur Fixierung des Blechpakets 4 auf der Rotorwelle 3 in Richtung der Rotorachse 5.

Von Vorteil ist insbesondere, wenn das diamagnetische oder paramagnetische Medium 11 ein einziges einheitliches Bauteil darstellt, das sich durch alle Aussparungen 2 der einzelnen gestapelten Blechschnitte 1 erstreckt und zusätzlich die beiden Endscheiben 6 bildet. Demnach besteht der erfindungsgemäße Rotor nur aus zwei Komponenten, d. h. dem diamagnetischen oder paramagnetischen Trägermedium 11 sowie dem Blechpaket 4, wobei das Trägermedium 11 sowohl die magnetische Sperrwirkung als auch die axiale Fixierung des Blechpaketes 4 entlang der Rotorachse 5 übernimmt.

Wie der Figur 1 zu entnehmen ist, weist der darin dargestellte Blechschnitt eine radiale Tragrippe 7 auf, die ausgehend von der Rotorwelle 3 die erste Aussparung 2a in radialer Richtung unterteilt. Derartige radiale Tragrippen 7 sind in bestimmten Ausführungsformen zur radialen Versteifung des Blechpakets 4 erforderlich.

In der Ausführungsform gemäß Figur 2 wurde auf eine derartige radiale Tragrippe 7 verzichtet. Voraussetzung hierzu ist es, dass die angreifenden Radialkräfte auf das Blechpaket 4 statt dessen durch das diamagnetische oder paramagnetische Trägermedium 11 aufgenommen werden können, um für eine ausreichende Stabilität des Rotors zu sorgen. Dazu wird die axiale Stapelung der Bleche 1 in regelmäßigen Abständen durch ringförmige Distanzelemente 9 (siehe Figur 6a) mit definierbaren Außendurchmessern unterbrochen. In radialer Richtung oberhalb der Distanzelemente 9 wird so zusätzlicher Raum für das diamagnetische oder paramagnetische Trägermedium 11 geschaffen.

Figur 6a zeigt eine Seitenansicht eines Teilabschnittes des Blechpakets 4, wobei die einzelnen Blechschnitte 1 nach der Ausführungsform der Figur 2 ausgeführt sind. Weiterhin sind zwei einzelne Distanzringe 9 zu erkennen, die jeweils zwei benachbarte Blechschnitte 1', 1", 1"', 1'''' beabstandet zueinander auf der Rotorachse 5 anordnen.

Der in radialer Richtung oberhalb der Distanzelemente 9 bis zum Außenumfang des Blechpakets 4 gebildete zylindrische Raum wird vollständig durch das diamagnetische oder paramagnetische Medium 11 gefüllt bis dieses mit dem Außendurchmesser der benachbarten Blechschnitte 1', 1", 1''', 1"" abschließt.

Figur 6b zeigt den aus den Blechschnitten 1 gemäß Figur 2 gebildeten Rotor in einer Seitenansicht. Das diamagnetische oder paramagnetische Medium 11 vervollständigt die zylindrische Form des Rotors.

Figur 3 zeigt eine weitere mögliche Ausführungsform des erfindungsgemäßen Rotors mit einem modifizierten Blechschnitt 1. In diesem Fall wurde der tangentiale Blechanteil 12 am äußeren Umfang nahe der q-Achse vollständig ausgespart. Der zum Vollzylinder fehlende Raumanteil wird hier durch das diamagnetische oder paramagnetische Trägermaterial 11 ergänzt. Die Seitenansicht des zusammengesetzten Verbundrotors entspricht der Abbildung in Figur 6b.

Eine weitere Modifizierung des Blechschnittes 1 ist in der Figur 4 ersichtlich. Neben der Aussparung des tangentialen Blechanteils 12 gemäß Figur 3 wurde auch der Blechanteil 13 am äußeren Umfang zwischen den entlang der q-Achse liegenden einzelnen magnetisch leitfähigen Rotorelementen 14 ausgespart. Folglich besteht der Rotor entlang der q-Achse aus einer Vielzahl einzelner magnetischer Elemente 14, die untereinander magnetisch nichtleitend verbunden sind, aber dennoch aus Einzelblechen bestehen. Dadurch wird die Permeabilität entlang der q-Achse weiter verringert und die Differenz zur d-Achse vorteilhaft erhöht. Die radiale und axiale Fixierung des weichmagnetischen Materials des Blechschnitts 1 bzw. des Blechpaketes 4 wird vollständig durch das diamagnetische oder paramagnetische Trägermaterial übernommen.

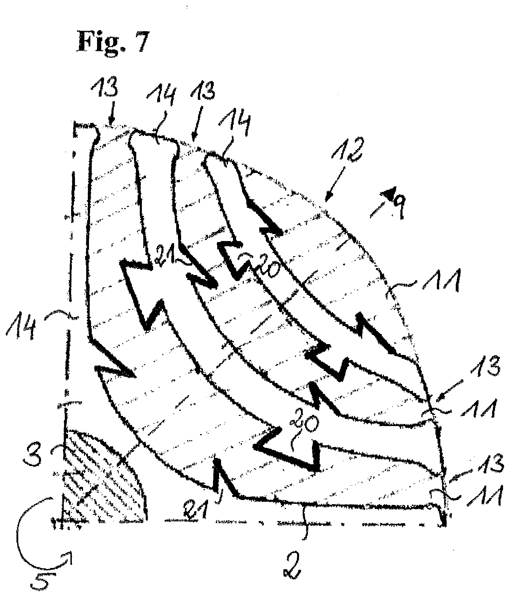

Eine Modifizierung des Ausführungsbeispiels der Figur 4 ist der Figur 7 zu entnehmen. Der Unterschied zur Figur 4 liegt darin, dass die einzelnen magnetisch leitfähigen Rotorelemente 14 alle eine Reihe von Zapfen 20, 21 aufweisen, die in entsprechende Aussparungen im Trägermaterial 11 zur Ausbildung eines Formschlusses eingreifen.

Die Zapfen können als trapezförmige Zapfen 20 zur Ausbildung einer Schwalbenschwanzverbindung ausgebildet sein oder eine andere geeignete Form zur Ausbildung eines Formschlusses, beispielsweise eine zacken- bzw. dreieckartige Form 21, aufweisen. Die Ausbildung der Zapfen 20, 21 und Aussparungen kann selbstverständlich vertauscht oder abwechselnd an dem Trägermaterial 11 und Rotorelement 14 angeordnet sein.

Ergänzend ist hinzuzufügen, dass die einzelnen Ausführungsvarianten der Figuren 1 bis 4 des Rotors ohne weiteres durch die Verwendung eines nach einem pulvermetallurgischen Herstellungsverfahren gefertigten Material als weichmagnetisches Element ausgeführt werden können. Die Form der einzelnen Blechpakete 4 nach den Figuren 1 bis 6 kann vollständig durch ein entsprechendes Material nachgebildet werden. Diese Ausgestaltungen gehören jedoch nicht zur Erfindung.

## Patentansprüche

1. Rotor für eine Synchronmaschine, insbesondere eine Reluktanzmaschine, umfassend ein zylinderförmig aufgebautes weichmagnetisches Element (1, 4), wobei das weichmagnetische Element (1, 4) Aussparungen (2) zur Ausbildung von magnetischen Flusssperren aufweist, die eine gerade Anzahl von ausgeprägten magnetischen Polen ausbilden, wobei wenigstens eine Aussparung (2) zumindest teilweise mit einem diamagnetischen oder paramagnetischen Medium (11) anstelle von Luft gefüllt ist, wobei das diamagnetische oder paramagnetische Medium (11) einen einteiligen Körper bildet und das weichmagnetische Element (1, 4) ein Blechpaket (4) ist,
**dadurch gekennzeichnet,**
**dass** wenigstens zwei benachbarte Bleche (1, 1') des Blechpaketes (4) in axialer Richtung zueinander beabstandet angeordnet sind und der gebildete Zwischenraum zumindest teilweise durch das diamagnetische oder paramagnetische Medium (11) gefüllt ist, wobei die Beabstandung durch Einfügen eines Distanzelementes (9) gewährleistet ist.

2. Rotor nach Anspruch 1, **dadurch gekennzeichnet, dass** das diamagnetische oder paramagnetische Medium (11) als Trägermedium des weichmagnetischen Elementes (1, 4) dient und dieses in axialer Richtung auf einer Rotorwelle (3) fixiert.

3. Rotor nach einem der vorhergehenden Ansprüche, **dadurch gekennzeichnet, dass** wenigstens eine Endscheibe (6) zur Fixierung des weichmagnetischen Elementes (1, 4) in axialer Richtung der Rotorachse (5) durch das diamagnetische oder paramagnetische Medium (11) ausgebildet ist.

4. Rotor nach einem der vorhergehenden Ansprüche, **dadurch gekennzeichnet, dass** ein im Bereich der q-Achse ausgesparter tangentialer Anteil (12) am äußeren Umfang des weichmagnetischen Elementes (1, 4) durch das diamagnetische oder paramagnetische Medium (11) vervollständigt ist.

5. Rotor nach einem der vorhergehenden Ansprüche, **dadurch gekennzeichnet, dass** wenigstens zwei auf der q-Achse zueinander benachbart liegende weichmagnetische Elementteile (14) magnetisch nichtleitend in Verbindung stehen.

6. Rotor nach einem der vorhergehenden Ansprüche, **dadurch gekennzeichnet, dass** das diamagnetische oder paramagnetische Medium (11) Polymere und/oder Duromere und/oder Keramik und/oder Glas und/oder Holz umfasst.

7. Verfahren zur Herstellung eines Rotors nach einem der vorhergehenden Ansprüche, **dadurch gekennzeichnet, dass** in einem ersten Verfahrensschritt das weichmagnetische zylinderförmige Element (1) in Form eines Blechpaketes (4) mit Aussparungen (2) zur Ausbildung von magnetischen Flusssperren und ausgeprägten magnetischen Polen aufgebaut wird, wobei wenigstens zwei benachbarte Bleche (1, 1') des Blechpaketes (4) in axialer Richtung zueinander beabstandet angeordnet werden und die Beabstandung durch Einfügen eines Distanzelementes (9) gewährleistet wird, in einem weiteren Verfahrensschritt das diamagnetische oder paramagnetische Medium (11) mittels einem urformenden Fertigungsverfahren, insbesondere Spritzguss, in bzw. um das aufgebaute weichmagnetische zylinderförmige Element (1, 4) ein- bzw. aufgebracht wird und das diamagnetische oder paramagnetische Medium (11) als einteiliger Körper ausgebildet wird.

8. Verwendung eines Rotors nach einem der Ansprüche 1 bis 6 in einer Reluktanzmaschine, insbesondere in einer Synchron-Reluktanzmaschine.

9. Reluktanzmotor, insbesondere Synchron-Reluktanzmotor, mit einem Rotor nach einem der Ansprüche 1 bis 6.

## Claims

1. Rotor for a synchronous machine, in particular a reluctance machine, comprising a cylindrically constructed, magnetically soft element (1, 4), wherein the magnetically soft element (1, 4) has cutouts (2) for the purpose of forming magnetic flux barriers which form an even number of salient magnetic poles, wherein at least one cutout (2) is filled at least partially with a diamagnetic or paramagnetic medium (11) instead of air, wherein the diamagnetic or paramagnetic medium (11) forms a unipartite body and the magnetically soft element (1, 4) is a laminated core (4), **characterized in that** at least two adjacent sheets (1, 1') of the laminated core (4) are arranged spaced apart from one another in the axial direction and the intermediate space that is formed is filled at least partially by the diamagnetic or paramagnetic medium (11), wherein the spacing is ensured by inserting a distance element (9) .

2. Rotor according to Claim 1, **characterized in that** the diamagnetic or paramagnetic medium (11) serves as a carrier medium of the magnetically soft element (1, 4) and fixes it to a rotor shaft (3) in the axial direction.

3. Rotor according to either of the preceding claims, **characterized in that** at least one end disc (6) is formed by the diamagnetic or paramagnetic medium (11) for the purpose of fixing the magnetically soft element (1, 4) in the axial direction of the rotor axis (5).

4. Rotor according to one of the preceding claims, **characterized in that** a tangential portion (12), that is removed in the region of the q-axis, on the outer circumference of the magnetically soft element (1, 4) is completed by the diamagnetic or paramagnetic medium (11).

5. Rotor according to one of the preceding claims, **characterized in that** at least two magnetically soft element parts (14) that lie adjacent to one another on the q-axis are connected in a magnetically nonconductive manner.

6. Rotor according to one of the preceding claims, **characterized in that** the diamagnetic or paramagnetic medium (11) comprises polymers and/or thermosetting plastics and/or ceramic and/or glass and/or wood.

7. Method for producing a rotor according to one of the preceding claims, **characterized in that**, in a first method step, the magnetically soft, cylindrical element (1) is constructed in the form of a laminated core (4) having cutouts (2) for the purpose of forming magnetic flux barriers and salient magnetic poles, wherein at least two adjacent sheets (1, 1') of the laminated core (4) are arranged spaced apart from one another in the axial direction, and the spacing is ensured by inserting a distance element (9), and, in a further method step, the diamagnetic or paramagnetic medium (11) is introduced into or applied around the constructed, magnetically soft, cylindrical element (1, 4) by means of a primary-forming manufacturing method, in particular injection moulding, and the diamagnetic or paramagnetic medium (11) is formed as a unipartite body.

8. Use of a rotor according to one of Claims 1 to 6 in a reluctance machine, in particular in a synchronous reluctance machine.

9. Reluctance motor, in particular synchronous reluctance motor, having a rotor according to one of Claims 1 to 6.

## Revendications

1. Rotor pour une machine synchrone, en particulier une machine à réluctance, comprenant un élément magnétique doux de construction cylindrique (1, 4), l'élément magnétique doux (1, 4) présentant des évidements (2) pour réaliser des barrières de flux magnétique qui constituent un nombre entier de pôles magnétiques en relief, au moins un évidement (2) étant rempli au moins en partie d'un milieu diamagnétique ou paramagnétique (11) au lieu d'être rempli d'air, le milieu diamagnétique ou paramagnétique (11) formant un corps d'une seule pièce et l'élément magnétique doux (1, 4) étant un paquet de tôles (4),
**caractérisé en ce**
**qu'**au moins deux tôles adjacentes (1, 1') du paquet de tôles (4) sont disposées à distance l'une de l'autre dans la direction axiale et l'espace intermédiaire formé est rempli au moins en partie par le milieu diamagnétique ou paramagnétique (11), l'espacement étant assuré par insertion d'un élément d'espacement (9).

2. Rotor selon la revendication 1, **caractérisé en ce que** le milieu diamagnétique ou paramagnétique (11) sert de milieu de support de l'élément magnétique doux (1, 4) et fixe celui-ci dans la direction axiale sur un arbre de rotor (3).

3. Rotor selon l'une quelconque des revendications précédentes, **caractérisé en ce qu'**au moins un disque d'extrémité (6) pour la fixation de l'élément magnétique doux (1, 4) dans la direction axiale de l'axe de rotor (5) est réalisé par le milieu diamagnétique ou paramagnétique (11).

4. Rotor selon l'une quelconque des revendications précédentes, **caractérisé en ce qu'**une proportion tangentielle (12) évidée dans la région de l'axe q au niveau de la périphérie extérieure de l'élément magnétique doux (1, 4) est complétée par le milieu diamagnétique ou paramagnétique (11).

5. Rotor selon l'une quelconque des revendications précédentes, **caractérisé en ce qu'**au moins deux parties d'élément magnétique doux (14) adjacentes l'une à l'autre sur l'axe q sont en liaison de manière non magnétiquement conductrice.

6. Rotor selon l'une quelconque des revendications précédentes, **caractérisé en ce que** le milieu diamagnétique ou paramagnétique (11) comprend des polymères et/ou des duromères et/ou de la céramique et/ou du verre et/ou du bois.

7. Procédé de fabrication d'un rotor selon l'une quelconque des revendications précédentes, **caractérisé en ce que** dans une première étape de procédé, l'élément cylindrique magnétique doux (1) est construit sous la forme d'un paquet de tôles (4) avec des évidements (2) pour réaliser des barrières de flux magnétique et des pôles magnétiques en relief, au moins deux tôles adjacentes (1, 1') du paquet de tôles (4) étant disposées à distance l'une de l'autre dans la direction axiale et l'espacement étant assuré par insertion d'un élément d'espacement (9), dans une étape de procédé supplémentaire, le milieu diamagnétique ou paramagnétique (11) est introduit ou appliqué au moyen d'un procédé de fabrication de formage primaire, en particulier de moulage par injection, dans ou autour de l'élément cylindrique magnétique doux construit (1, 4) et le milieu diamagnétique ou paramagnétique (11) est réalisé sous forme de corps d'une seule pièce.

8. Utilisation d'un rotor selon l'une quelconque des revendications 1 à 6 dans une machine à réluctance, en particulier dans une machine à réluctance synchrone.

9. Moteur à réluctance, en particulier moteur à réluctance synchrone, comprenant un rotor selon l'une quelconque des revendications 1 à 6.
